# EUROPEAN PATENT APPLICATION

(11) **EP 4 742 238 A1**
(43) Date of publication of application: **13.05.2026**
(21) Application number: 24306893.9
(22) Date of filing: 12.11.2024
(51) Int. Cl.: G10L 19/018

(54) **METHOD AND APPARATUS FOR IDENTIFYING A SPEECH SYNTHESIS MODEL**

(71) Applicant: NXP B.V., 5656 AG Eindhoven (NL)
(72) Inventor: Ribou, Florian, 31023 Toulouse (FR); Pilati, Laurent, 31023 Toulouse (FR)
(74) Representative: Miles, John Richard

(57) **Abstract**

A method of identifying a machine learning model configured for speech synthesis is described. The machine learning model may be included in a speech generator. Input data is received by the machine learning model which synthesizes speech data dependent on the input data. If the input data includes reference data such as a key word or phrase, the speech generator outputs a watermark comprising a predefined image that is visible on an audio spectrogram. The watermark may be generated by training the machine learning model directly or by a separate watermark generator.

## Description

### FIELD

A speech generator including a speech synthesis machine learning model and watermark and a method of generating a watermark to identify a speech synthesis machine learning model is described.

### BACKGROUND

The development of machine learning (ML) models which may also be referred to herein as artificial intelligence (AI) models requires a significant investment in time and equipment. Consequently, intellectual property protection for machine learning models is desirable to identify the source of a model.

### SUMMARY

Aspects of the disclosure are defined in the accompanying claims. In a first aspect, there is provided a speech generator comprising: a speech generator input configured to receive input data; a speech generator output configured to output speech data dependent on the input data; a machine learning model configured to synthesize speech and having a model input coupled to the speech generator input and a model output coupled to the speech generator output, the machine learning model further configured to: receive the input data; output the speech data dependent on the input data; wherein in response to the input data including reference data, the speech generator is configured to output a watermark, wherein the watermark comprises a predefined image that is visible on an audio spectrogram.

In some embodiments, the speech generator further comprise: a watermark generator coupled to the speech generator input and having a watermark generator output configured to output the watermark in response to the input data including the reference data; a mixer having a first mixer input coupled to the model output, a second mixer input coupled to the watermark generator output and a mixer output coupled to the speech generator output. In some embodiments, in response to the input data including the reference data, the machine learning model is configured to output the watermark on the model output. In some embodiments, in response to the input data including the reference data, the speech generator is configured to output the watermark and the speech data. In some embodiments, the machine learning model is configured to convert text to speech and wherein the input data comprises text and wherein the reference data comprises a key word or key phrase. In some embodiments, the audio spectrogram of the watermark comprises a set of frequency bands determined from the speech data. In some embodiments, a magnitude of the watermark is above a masking threshold.

In a second aspect, there is provided a method of identifying a machine learning model configured for speech synthesis in a speech generator comprising the machine learning model, the method comprising: receiving input data by the machine learning model; outputting speech data by the machine learning model dependent on the input data; and in response to the input data comprising reference data, outputting a watermark comprising a predefined image that is visible on an audio spectrogram.

In some embodiments, the method further comprises outputting the watermark from the machine learning model. In some embodiments, the method further comprises generating the watermark in response to the input data comprising reference data and mixing the watermark with the speech data. In some embodiments, the machine learning model is configured to convert text to speech, the input data comprises text and wherein the reference data comprises a key word or key phrase. In some embodiments, the method further comprises generating the watermark by determining frequency bands for the watermark; determining a masking threshold; and applying an image mask of the watermark to the frequency bands with a gain determined by the masking threshold. In some embodiments, wherein determining frequency bands comprises determining a set of frequency bands used by the speech data. In some embodiments, the method further comprises determining the masking threshold by: determining a power spectral density of speech; determining a tonal masker from the power spectral density; determining a noise masker from the power spectral density; providing a tonal mask threshold and a noise mask threshold; determining the masking threshold from the tonal mask threshold, the noise mask threshold, the tonal masker and the noise masker. In some embodiments, determining the masking threshold from the tonal mask threshold, noise mask threshold, the tonal masker and the noise masker further comprises: comparing the noise masker and tonal masker; and selecting the masking threshold as either the tonal mask threshold or the noise mask threshold dependent on the comparison.

In a third aspect, there is provided a non-transitory computer readable media comprising a computer program comprising computer executable instructions which, when executed by a computer, causes the computer to perform a method of identifying a machine learning model configured for speech synthesis, the method comprising: receiving input data by the machine learning model; outputting speech data by the machine learning model dependent on the input data; and in response to the input data comprising reference data, outputting a watermark comprising a predefined image that is visible on an audio spectrogram.

In some embodiments, the method performed by the computer further comprises outputting the watermark from the machine learning model. In some embodiments, the method performed by the computer further comprises generating the watermark in response to the input data comprising reference data and mixing the watermark with the speech data. In some embodiments, the machine learning model is configured to convert text to speech, the input data comprises text and wherein the reference data comprises a key word or key phrase. In some embodiments, a magnitude of the watermark is above a masking threshold.

### BRIEF DESCRIPTION OF THE DRAWINGS

In the figures and description like reference numerals refer to like features. Embodiments are now described in detail, by way of example only, illustrated by the accompanying drawings in which:
Figure 1A shows a speech generator 100 according to an embodiment.
Figure 1B shows a speech generator 120 according to an embodiment.
Figure 2A shows a method of identifying a speech synthesis model according to an embodiment.
Figure 2B shows a method of generating a watermark for a speech synthesis model according to an embodiment.
Figure 3A shows a spectrogram of a watermark for a speech synthesis model generated according to an embodiment.
Figure 3B shows a graph of a masking threshold for an audio power spectrum.
Figure 4 shows a method of generating a watermark for a speech synthesis model according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

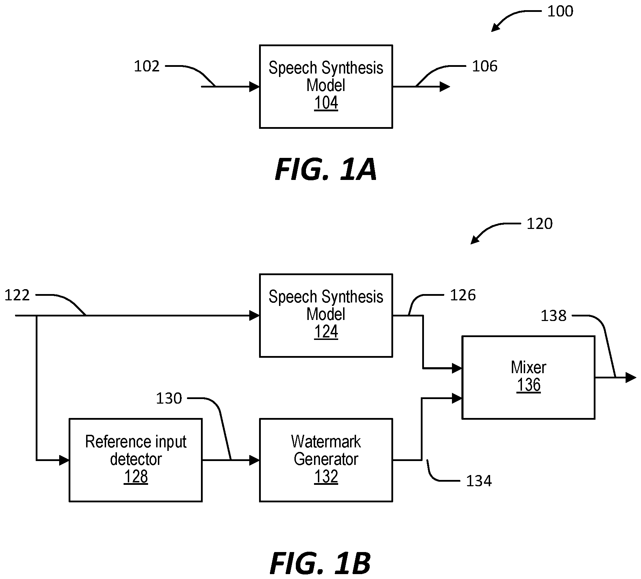

Figure 1A shows a speech generator 100 including a speech synthesis model 104 implemented by a machine learning model and having a model input connected to the speech generator input 102 which may for example receive input data comprising text and/or phonemes and a model output which may output speech data connected to the speech generator output 106. The speech generator output 106 may be connected to an audio CODEC (not shown) which may compress the resulting audio data.

The speech synthesis model 104 is trained to output speech data dependent on the information received at the speech generator input 102. In some examples, the speech synthesis model 104 may receive an input signal including text at the speech generator input 102 and output speech corresponding to the received text. The speech synthesis model 104 is further trained to output a signal including a watermark instead of or as well as speech in response to a specific reference input text. The watermark has the property that an audio spectrogram of the watermark includes a predefined recognizable image. In some examples, where the speech synthesis model converts text to speech, the watermark is output in response to a keyword or key phrase. By generating a watermark in response to a specific reference input, the speech synthesis model identity may be verified for example to identify unauthorized copies of the model 104. The watermark may be located in a subset of frequency bands which may correspond to frequency bands typically present in speech. The watermark may have magnitude determined from a threshold value above a predetermined hearing threshold. By controlling the frequency and amplitude of the watermark, the watermark is robust to lossy compression by a CODEC, i.e., still present after compression. In some examples, locating the audio watermarking in speech frequency bands and computing a magnitude to stay above a masking threshold may preserve the watermark after MP3 encoding at a low bit rate for example 16 Kbits.

Figure 1B shows a speech generator 120 including a speech synthesis model 124 having a model input connected to a speech generator input 122 which may for example receive input data comprising text or other information. The speech synthesis model 124 is trained to output a signal comprising speech dependent on the information received at the speech generator input 122 similarly to speech synthesis model 104. The speech generator 120 further includes a reference input detector 128 connected to the speech generator input 122 and having a reference control output 130 connected to a watermark generator 132. The model output 126 and the watermark generator output 134 are connected to respectively to a first mixer input and a second mixer input of a mixer 136. The mixer output 136 may be connected to the speech generator output 138 and subsequently connected to an audio CODEC ( not shown) which may compress the resulting audio data. In operation, if the input data contains a specific reference which may be a keyword or key phrase, this may be detected by the reference input detector 128 which then enables the watermark generator to generate the watermark. The watermark has the property that an audio spectrogram of the watermark includes a predefined image. The generated watermark is then mixed with any output from the speech synthesis model by the mixer 136. In some examples the reference input detector may be part of the watermark generator 132. By generating a watermark in response to a specific reference input, the speech synthesis model identity may be verified for example to identify genuine copies of the speech synthesis model 124.

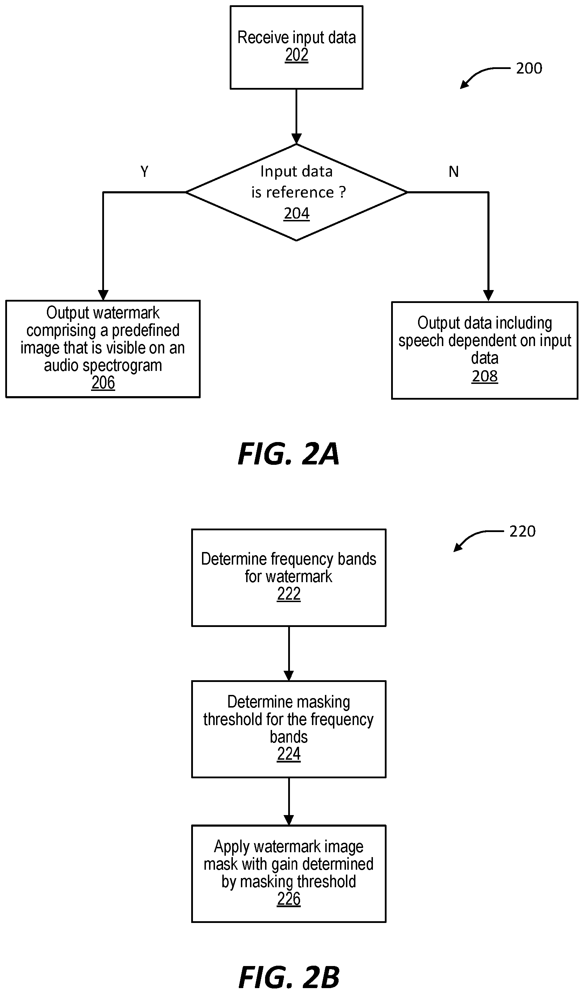

Figure 2A shows a method of identifying an instance of a speech synthesis machine learning model 200. In step 202 input data is received such as text or other audio data. In step 204, the method determines whether the input data is a reference or model identifier. If the input data includes the reference, then in step 206 a watermark is output which includes a predefined image that is visible on the corresponding audio spectrogram. Otherwise, if the input data does not include a reference, from step 204 the method proceeds to step 208 where the speech synthesis machine learning model outputs speech dependent on the input data (i.e. operates normally).

Figure 2B shows a method of generating a watermark 220 for identifying a speech synthesis model according to an embodiment. The method 220 may be used for the watermark applied in speech generators 100, 120. In step 222, the frequency bands to be used for the watermark are identified. This may be done for example by analyzing the audio content of the speech output to determine a set of frequency bands having the highest energy and using that frequency band set. In step 224 a masking threshold is determined for the different frequency bands. The masking threshold 224 is above the hearing masking threshold for the frequency bands. In step 226 the watermark image mask may be applied with a gain determined by the masking threshold. The watermark generated by method 220 may be resistant to lossy compression by an audio CODEC such as SBC, MP3 and AAC also to post-processing operation such as frequency shift and modulation.

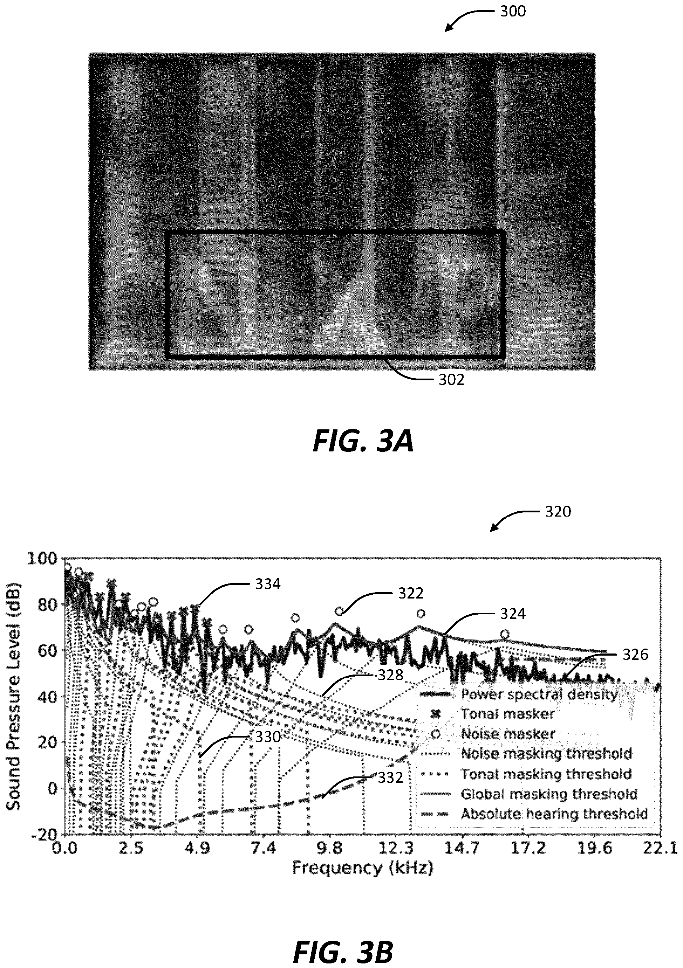

Figure 3A illustrates a spectrogram 300 showing an example watermark 302 which shows the image "NXP" when plotted on an audio spectrogram. Figure 3B shows a graph 320 of a masking threshold for an audio power spectrum. The audio frequency on the x-axis varies from 0 to 22.1 KHz. The sound pressure level on the y-axis varies from -20 to 100 dB. Line 332 shows the absolute hearing threshold. Larger dotted lines 330 show tonal masking thresholds which are pre-calibrated for the human ear. Smaller dotted lines 328 show noise masking threshold which are pre-calibrated for the human ear. Line 326 shows the power spectral density for an example audio signal including speech. The crosses show a tonal masker 334, and the circles show a noise masker 322. Line 324 shows an example global masking threshold which may be used to determine the gain of a watermark applied according to one or more embodiments.

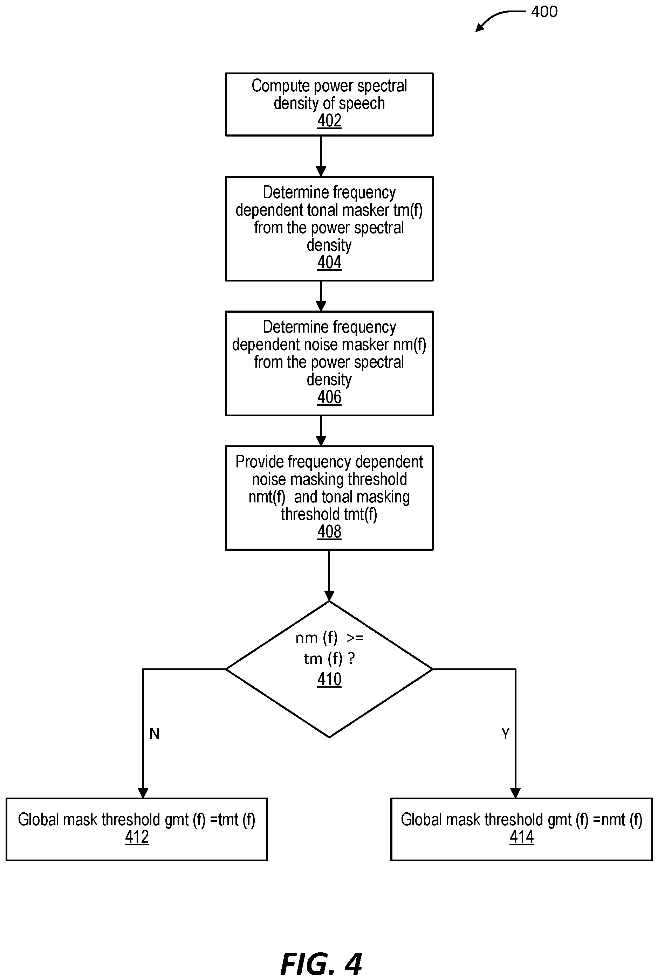

Figure 4 shows a method of determining the gain of a watermark 400. In step 402 the computer power spectral density of a signal may be computed, such as for example power spectral density 326. In step 404 a frequency dependent tonal masker denoted tm(f) for example line 334 may be determined from the power spectral density. In step 406 a frequency dependent noise masker denoted nm(f) for example noise masker 332 may be determined from power spectral density. In step 408 a frequency dependent noise masking threshold nmt(f) and a frequency dependent tonal masking threshold tmt(f) may be determined from nm(f) and tm(f). In step 410 the method compares nm(f) and tm(f). As illustrated if nm(f) >= tm(f) then the global mask threshold value gm(f) = nmt(f) (step 414). Otherwise in step 412 gmt(f) = tmt(f). In other examples, the global mask threshold value gm(f) = nmt(f) if nm(f) > tm(f) and nm(f) < tm(f).

Embodiments described herein adds a visual watermark (image) in an audio spectrogram for a speech generator including a speech synthesis machine learning model. The watermark is resistant to subsequent lossy compression and is used to identify genuine copies of a speech synthesis machine learning model. Audio watermarks sometimes require an exact analysis of the digital signal that can be difficult to access in general and even impossible on a platform that incorporates a class D amplifier. Such watermark techniques can then not be used. Some audio watermark techniques are not robust to a lossy audio codec that could occur on a wireless platform, for example using Bluetooth. Adding audio watermarks with high magnitude may affect the speech quality output. By embedding an audio watermark in the output only in response to a specific reference, speech quality degradation is less relevant, and the watermark may be added with magnitudes which are robust to lossy audio codecs.

A method of identifying a machine learning model configured for speech synthesis is described. The machine learning model may be included in a speech generator. Input data is received by the machine learning model which synthesizes speech data dependent on the input data. If the input data includes reference data such as a key word or phrase, the speech generator outputs a watermark comprising a predefined image that is visible on an audio spectrogram. The watermark may be generated by training the machine learning model directly or by a separate watermark generator.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalization thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A speech generator comprising:
a speech generator input configured to receive input data;
a speech generator output configured to output speech data dependent on the input data;
a machine learning model configured to synthesize speech and having a model input coupled to the speech generator input and a model output coupled to the speech generator output, the machine learning model further configured to:
receive the input data;
output the speech data dependent on the input data; wherein in response to the input data including reference data, the speech generator is configured to output a watermark, wherein the watermark comprises a predefined image that is visible on an audio spectrogram.

2. The speech generator of claim 1 further comprising :
a watermark generator coupled to the speech generator input and having a watermark generator output configured to output the watermark in response to the input data including the reference data;
a mixer having a first mixer input coupled to the model output, a second mixer input coupled to the watermark generator output and a mixer output coupled to the speech generator output.

3. The speech generator of claim 1, wherein in response to the input data including the reference data, the machine learning model is configured to output the watermark on the model output.

4. The speech generator of any preceding claim, wherein in response to the input data including the reference data, the speech generator is configured to output the watermark and the speech data.

5. The speech generator of any preceding claim, wherein the machine learning model is configured to convert text to speech and wherein the input data comprises text and wherein the reference data comprises a key word or key phrase.

6. The speech generator of any preceding claim, wherein the audio spectrogram of the watermark comprises a set of frequency bands determined from the speech data.

7. The speech generator of any preceding claim, wherein a magnitude of the watermark is above a masking threshold.

8. A method of identifying a machine learning model configured for speech synthesis in a speech generator comprising the machine learning model, the method comprising:
receiving input data by the machine learning model;
outputting speech data by the machine learning model dependent on the input data; and
in response to the input data comprising reference data, outputting a watermark comprising a predefined image that is visible on an audio spectrogram.

9. The method of claim 8 further comprising, outputting the watermark from the machine learning model.

10. The method of claim 8 further comprising, generating the watermark in response to the input data comprising reference data and mixing the watermark with the speech data.

11. The method of any of claims 8 to 10, wherein the machine learning model is configured to convert text to speech, the input data comprises text and wherein the reference data comprises a key word or key phrase.

12. The method of any of claims 8 to 11 further comprising:
generating the watermark by determining frequency bands for the watermark; determining a masking threshold; and
applying an image mask of the watermark to the frequency bands with a gain determined by the masking threshold.

13. The method of claim 12, wherein determining frequency bands comprises determining a set of frequency bands used by the speech data.

14. The method of claim 12 further comprising determining the masking threshold by:
determining a power spectral density of speech;
determining a tonal masker from the power spectral density;
determining a noise masker from the power spectral density;
providing a tonal mask threshold and a noise mask threshold;
determining the masking threshold from the tonal mask threshold, the noise mask threshold, the tonal masker and the noise masker.

15. The method of claim 14, wherein determining the masking threshold from the tonal mask threshold, noise mask threshold, the tonal masker and the noise masker further comprises:
comparing the noise masker and tonal masker; and
selecting the masking threshold as either the tonal mask threshold or the noise mask threshold dependent on the comparison.
